# EUROPÄISCHE PATENTSCHRIFT

(11) **EP 1 658 200 B1**
(45) Veröffentlichungstag und Bekanntmachung des Hinweises auf die Patenterteilung: **15.08.2007**
(21) Anmeldenummer: 04766482.6
(22) Anmeldetag: 12.08.2004
(51) Int. Cl.: B60R 16/00

(54) **FAHRZEUGSYSTEM**
VEHICLE SYSTEM
SYSTEME POUR VEHICULE

(30) Priorität: 18.08.2003 DE 10337852
(43) Veröffentlichungstag der Anmeldung: 24.05.2006
(73) Patentinhaber: ROBERT BOSCH GMBH, 70442 Stuttgart (DE)
(72) Erfinder: JUNG, Clemens, 30559 Hannover (DE); FREIENSTEIN, Heiko, 31141 Hildesheim (DE)
(86) Internationale Anmeldenummer: PCT/EP2004/051779
(87) Internationale Veröffentlichungsnummer: WO 2005/016701

(56) Entgegenhaltungen:
- DE-A1- 4 301 160
- US-A- 5 279 459
- US-A1- 2003 220 725
- US-B1- 6 435 055

## Beschreibung

### Stand der Technik

Die Erfindung geht von einem Fahrzeugsystem zum Betrieb in einem Kraftfahrzeug nach der Gattung des unabhängigen Patentanspruchs aus.

Es sind Fahrzeugsysteme in Form von Fahrzeugnavigationssystemen bekannt, die Fahrtrichtungshinweise zur Führung eines Fahrzeugführers entlang einer zuvor berechneten Fahrtroute zu einem Zielort in akustischer und/oder optischer Form ausgeben. Zur Berechnung der Fahrtroute ist vorab die Eingabe des Zielorts durch den Fahrzeugführer über eine Bedienoberfläche des Fahrzeugnavigationssystems erforderlich. Da die Zielorteingabe während der Fahrt eine erhebliche Ablenkung vom Verkehrsgeschehen mit sich bringt, wurde und wird diskutiert, die Bedienung des Geräts, insbesondere die Zielorteingabe, während der Fahrt des Fahrzeugs zu unterbinden (hier im weiteren auch als "Speed-Lock-Funktion" bezeichnet).

In DE 199 52 857 C1 ist eine Vorrichtung zur fahrerzustandsabhängigen Steuerung von Fahrzeugkomponenten beschrieben, bei der der Fahrerzustand bestimmt wird und davon abhängig eine Informationsfilterung von darzustellenden Informationen vorgenommen wird. Hierdurch wird die Bedienung und Steuerung durch den Fahrer verbessert und die Sicherheit erhöht, da der Fahrer entlastet wird. Bei der Vorrichtung wird die Bedienung einer Funktionalität des elektronischen Gerätes situationsabhängig eingeschränkt. Beispielsweise kann die Zieleingabe eines Navigationsgeräts während der Fahrt nicht genutzt werden oder ein Fernseher nicht eingeschaltet werden. Ebenso kann in Abhängigkeit von der Fahrgeschwindigkeit eine komplette Anwendung oder Teilfunktionalitäten einer Anwendung des elektronischen Gerätes ein- oder ausgeschaltet werden.

In der nicht vorveröffentlichten älteren deutschen Patentanmeldung mit dem Aktenzeichen 102 55 435.8 wird ein Fahrerinformationssystem mit einer Bedieneinrichtung vorgeschlagen, bei dem die Bedienung bei erkannter Fahrt des Fahrzeugs zumindest eingeschränkt wird, also mit der beschriebenen Speed-Lock-Funktion, wobei jedoch diese Beschränkung dann zumindest teilweise aufgehoben wird, wenn beispielsweise mittels eines Gurtschlosssensors oder eines Gewichtssensors eine Belegung des Beifahrersitzplatzes festgestellt wird. Diese Lösung vertraut darauf, dass im Falle eines belegten Beifahrersitzplatzes auch tatsächlich der Beifahrer die Bedienung des Fahrerinformationssystems übernimmt, eine Bedienung durch den Fahrzeugführer ist jedoch nicht ausgeschlossen. In der Praxis zeigt sich, dass auch bei belegtem Beifahrersitzplatz oftmals der Fahrzeugführer selbst die Gerätebedienung übernimmt.

Die DE 43 01 160 A1 (Oberbegriff von Anspruch 1) offenbart eine Einrichtung zur Beeinflussung des Bedien- bzw. Funktionsumfangs eines Fahrerinformationssystems in Abhängigkeit davon, ob ein Fahrzeugführer oder ein Beifahrer auf das Fahrerinformationssystem zugreift. Zusätzlich wird die aktuelle Fahrzeuggeschwindigkeit berücksichtigt. Dazu wird auf elektrischem Wege detektiert, welcher der genannten Fahrzeuginsassen auf ein Bedienelement des Fahrerinformationssystems zugreift. Greift der Fahrzeugführer zu und bewegt sich ferner das Fahrzeug mit einer Geschwindigkeit größer einem Schwellwert, wird der Funktionsumfang des Fahrerinformationssystems eingeschränkt.

Die US 5 279 459 offenbart eine Steuerung für eine Fahrzeugheizung, bei der die Warmluftzufuhr für unterschiedliche Sitzplätze im Fahrzeug unterschiedlich eingestellt werden kann. Diese ist unabhängig davon einstellbar zu sein, welcher der Fahrzeuginsassen auf die Steuerung zugreift. Insbesondere scheint keine Beschränkung der Einstellbarkeit vorgesehen zu sein, wenn der Fahrzeugführer die Einstellung vornimmt.

Die US 6 435 055 offenbart eine Bremsvorrichtung für ein Fahrschulfahrzeug, mittels derer das Bremspedal durch einen Handhebel durch den auf dem Beifahrersitzbefindlichen Fahrlehrer beeinflussbar ist, so dass der Fahrlehrer bei vermeintlichem Fehlverhalten des Fahrschülers eingreifen kann.

### Vorteile der Erfindung

Ein erfindungsgemäßes Fahrzeugsystem mit den Merkmalen des unabhängigen Patentanspruchs hat den Vorteil, dass die Bedienung in Abhängigkeit davon beeinflusst wird, ob der Fahrzeugführer oder ein sonstiger Insasse des Fahrzeugs auf das Fahrzeugsystem zugreift. Damit werden Bedienzugriffe, die den Fahrzeugführer übermäßig von der eigentlichen Fahraufgabe ablenken können, wirkungsvoll verhindert. Gleichzeitig bleibt das Fahrzeugsystem aber für sonstige Fahrzeuginsassen in zumindest einem weiten oder aber vollen Umfang bedienbar. Unter Bedienung werden dabei im Zusammenhang vorliegender Erfindung primär Eingaben des Bedieners in das Fahrzeugsystem, aber auch Ausgaben des Fahrzeugsystems an den Nutzer verstanden.

Im Falle eines Navigationssystems kann somit beispielsweise der Beifahrer insbesondere während der Fahrt des Fahrzeugs die Bedienung des Navigationssystems übernehmen. Eine Bedienung während der Fahrt kann beispielsweise bei einer manuellen Änderung der Fahrtroute aufgrund von bei einer vorangegangenen Routenberechnung nicht berücksichtigten Verkehrsstörungen oder Fehlern im Navigations-Datenmaterial nötig sein.

Bei Fahrten mit Beifahrer werden so zusätzliche Eingaben möglich und unnötige Stopps vermieden - ebenfalls Sicherheitsargumente. Die Erfindung erlaubt eventuell auch eine gegenüber der herkömmlichen Speed-Lock-Funktion weitergehende Einschränkung der Bedienung im Falle von Bedienzugriffen des Fahrzeugführers insbesondere im Rahmen der Speed-Lock-Funktion, also bei Fahrt des Fahrzeugs.

In jedem Fall erhöht die Erfindung die Benutzer-Akzeptanz der Speed-Lock-Funktion und sichert einen Wettbewerbsvorteil.

### Zeichnungen

Ausführungsbeispiele der Erfindung sind in den Zeichnungen dargestellt und werden nachfolgend näher erläutert.

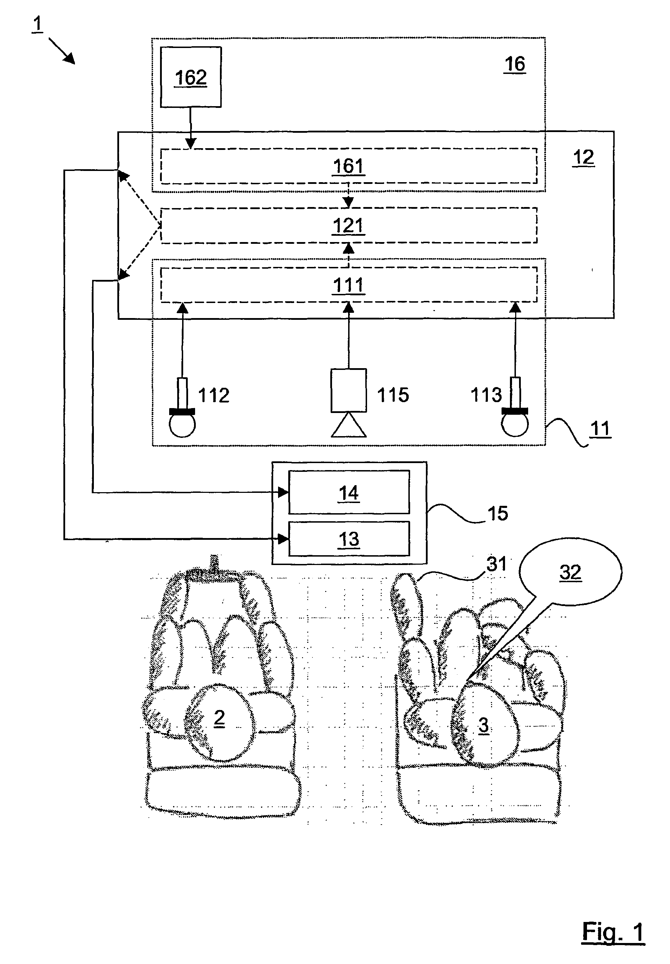

Es zeigen
Figur 1 ein Blockschaltbild des erfindungswesentlichen Teils eines erfindungsgemäßen . Fahrzeugssystems,
Figur 2 einen Ablaufplan des erfindungswesentlichen Teils einer in einer Steuerung des Fahrzeugsystems ablaufenden Steuerungssoftware.

### Beschreibung der Ausführungsbeispiele

Das erfindungsgemäße Fahrzeugsystem wird im folgenden vorwiegend am Beispiel eines Fahrzeugnavigationssystems näher beschrieben. Dies bedeutet jedoch keine Einschränkung der Erfindung auf Fahrzeugnavigationssysteme. Vielmehr ist die Erfindung auch auf andere Fahrzeugsysteme, wie beispielsweise Autoradios oder in einem Fahrzeug betriebene Mobiltelefone anwendbar.

Das erfindungsgemäße Fahrzeugsystem 1 umfasst eine Eingabeeinrichtung 13 mit in der Figur nicht näher dargestellten Bedienelementen, vorzugsweise Tastschaltern und/oder Inkrementendrehgebern, zur Eingabe von Befehlen und/oder Betriebsparametern in das Fahrzeugsystem 1. Im Falle eines Fahrzeugnavigationssystems dienen die beschriebenen Bedienelemente beispielsweise in Verbindung mit einer Steuerung 12 des Navigationssystems der Eingabe eines Zielorts für eine nachfolgende Routenberechnung vom Stand- zum Zielort und eine daran anschließende Zielführung. Im Falle eines Mobiltelefons dienen die Bedienelemente beispielsweise der Anwahl einer bestimmten Telefonnummer eines gewünschten Gesprächsteilnehmers oder der Entgegennahme eines eingehenden Telefonanrufs.

Das erfindungsgemäße Fahrzeugsystem 1 umfasst ferner eine Ausgabeeinrichtung 14, die vorzugsweise als optische und/oder akustische Ausgabe ausgeführt ist. Im Falle eines Fahrzeugnavigationssystems dient die Ausgabeeinrichtung 14 in Verbindung mit der Zielführung der Ausgabe von Fahrtrichtungshinweisen zur Leitung des Fahrzeugführers in Form gesprochener Fahrtrichtungshinweise und/oder auf einem Display angezeigter Richtungspfeile. Alternativ oder ergänzend kann eine Kartendarstellung vorgesehen sein, auf der die berechnete Fahrtroute oder ein Ausschnitt derselben zur Orientierung des Fahrzeugführers angezeigt werden kann.

Ferner dient die Ausgabeeinrichtung 14 in Verbindung mit der Zielorteingabe beispielsweise der Anzeige von auswählbaren Zielorten und/oder einer Kartendarstellung, auf der mittels eines durch die Bedienelemente der Eingabevorrichtung 13 bedienbaren Cursors ein Zielort markiert werden kann.

Im Falle eines Autoradios umfasst die Ausgabeeinrichtung 14 beispielsweise das Display des Autoradios, auf dem neben dem Namen oder der Empfangsfrequenz eines aktuell eingestellten Senders mit dem Radio-Daten-System (RDS) übertragene sich ändernde Anzeigen, wie Titel und Interpret eines aktuell übertragenen Musikstücks oder Laufschriften, wie zum Beispiel Werbetexte, angezeigt werden.

Eingabeeinrichtung 13 und Ausgabeeinrichtung 14, die jeweils mit der Steuerung 12 verbunden sind, bilden zusammen eine Bedieneinrichtung 15 des erfindungsgemäßen Fahrzeugsystems.

An die Steuerung 12 des erfindungsgemäßen Fahrzeugsystems sind ferner Mittel 11 angeschlossen, die dazu ausgebildet sind zu erkennen, ob der Fahrzeugführer selbst oder ein anderer Fahrzeuginsasse auf die Bedieneinrichtung 15 des Fahrzeugsystems 11 zugreift, und die in Abhängigkeit der zugreifenden Person ein entsprechendes Zugriffserkennungssignal erzeugen.

Die Zugriffserkennungsmittel 11 umfassen dazu Sensoren zur Erfassung von Informationen, aufgrund derer eine Feststellung möglich ist, welcher der Fahrzeuginsassen auf die Bedieneinrichtung 15 zur Bedienung des Fahrzeugsystems 1 zugreift.

Bei einer ersten Ausführungsform der Bedienererkennung besteht diese Sensorik in einer Kamera 115, deren Bilderfassungsbereich zumindest den Fahrer-(2) oder den Beifahrersitzplatz (3), vorzugsweise aber sowohl Fahrer- als auch Beifahrersitzplatz erfasst. Die von der Kamera aufgenommenen Bildinformationen werden in einem ersten Softwaremodul 111 der Steuerung 12 verarbeitet und daraus ein Signal abgeleitet, das anzeigt, ob der Fahrzeugführer 2 oder der Beifahrer 3 auf die Bedieneinrichtung 15, insbesondere die Bedienelemente der Eingabeeinrichtung 13 zugreift.

Die genaue Funktionsweise des ersten Softwaremoduls 111 zur Ableitung eines den bedienenden Fahrzeuginsassen ist nicht Gegenstand vorliegender Erfindung und wird daher nicht näher beschrieben. Ansätze hierzu sind aus der Literatur hinlänglich bekannt. Beispielhaft wird dazu auf den Übersichtsartikel
D. M. Gavrila: "The Visual Analysis of Human Movement: A Survey" in Computer Vision an Image Understanding, vol. 73, no. 1, January, pp. 82-98, 1999
verwiesen, in dem Lösungsansätze beschrieben sind, und auf dessen Offenbarungsgehalt bezüglich der Fahrer- oder Beifahrererkennung hiermit vollumfänglich Bezug genommen wird.

Hierzu eignet sich beispielsweise ein Bildmustervergleich, wobei als Vergleichsbasis beispielsweise ein zuvor aufgenommenes und als Bestandteil der Softwarekomponente abgespeichertes Bild beispielsweise der Hand bzw. zusätzlich Arm und ggf. Oberkörper des bedienenden Beifahrers dient. Alternativ können auch dreidimensionale oder sonstige Bilderkennungsalgorithmen eingesetzt werden.

Wesentlich ist im Zusammenhang mit vorliegender Erfindung lediglich, dass die erste Softwarekomponente 111 in der Lage ist, aus den Bildsignalen der Kamera 115 eindeutig zu bestimmen, ob die Hand des Fahrzeugführers 2 oder die Hand 31 des Beifahrers 3 auf die Bedienelemente der Eingabeeinrichtung 13 des Fahrzeugsystems 1 zugreift.

Eine vorteilhafte Abwandlung dieser ersten Ausführungsform der Zugriffserkennungsmittel 11 sieht vor, dass statt nur einer einzelnen Kamera 115 mindestens zwei voneinander beabstandete Videosensoren oder ein Mehrkamera-Videosensor vorgesehen ist. Die durch diese Sensorik erfassten Stereo- bzw. Mehrkanal-Bildinformationen ermöglichen eine dreidimensionale Erfassung des Fahrer- oder Beifahrerseitzplatzes bzw. Fahrers oder Beifahrers.

Gemäß einer Weiterbildung der ersten Ausführungsform werden zum Zwecke der Zugriffserkennung 11 außerdem in den Videosignalen enthaltene Grauwertinformationen ausgewertet.

Eine weitere vorteilhafte Abwandlung dieser ersten Ausführungsform sieht vor, dass die Zugriffserfassungsmittel (11) nach dem Prinzip von Tiefensensoren arbeitet, wobei diese im vorliegenden Fall einer Videosensorik auf dem Prinzip der sogenannten strukturierten Beleuchtung aufsetzen.

Sowohl die Auswertung von Stereo- oder Multikanal-Videoinformationen als auch das Prinzip der strukturierten Beleuchtung sind Stand der Technik und beispielsweise in
X. Jiang "Dreidimensionales Computersehen", Springer-Verlag, Berlin Heidelberg
ausführlich beschrieben, auf welche Veröffentlichung hiermit ausdrücklich Bezug genommen wird, so dass sich eine ausführliche Erläuterung dieser Prinzipien an dieser Stelle erübrigt.

Eine zweite Ausführungsform der Bedienererkennung 11 geht davon aus, dass die Bedienung des Fahrzeugsystems 1 zumindest teilweise, insbesondere dessen komplexere Bedienfunktionen, durch gesprochene Befehle erfolgt. Zur Erfassung der Sprachbefehle ist mindestens ein Mikrofon 112 erforderlich. Dieses ist beispielsweise im Rahmen einer Freisprecheinrichtung für ein Mobiltelefon vorzugsweise vor dem Fahrersitzplatz im oder auf dem Armaturenbrett des Kraftfahrzeugs angeordnet. Zur Erkennung, ob die Sprachbefehle vom Fahrzeugführer 2 oder dem Beifahrer 3 gesprochen werden, ist mindestens ein zweites Mikrofon 113 vorgesehen, das von dem ersten Mikrofon 112 räumlich getrennt, vorzugsweise vor dem Beifahrersitzplatz im Armaturenbrett des Kraftfahrzeugs installiert ist. Die Signale sowohl des ersten als auch den zweiten Mikrofons sind der ersten Softwarekomponente 111 der Steuerung 12 zugeführt. Diese erkennt aufgrund der Laufzeitunterschiede zwischen den Signalen des ersten und des zweiten Mikrofons beispielsweise durch Kreuzkorrelation der beiden Mikrofonsignale, ob der Fahrzeugführer 2 oder der Beifahrer 3 die Sprachbefehle gesprochen hat. Dies ist durch die beschriebene Anordnung der Mikrofone 112 und 113 möglich, da beispielsweise vom Fahrzeugführer 2 gesprochene Befehle zum zweiten Mikrofon 113 eine größere Laufzeit zurücklegen als zu dem vor ihm angeordneten ersten Mikrofon 112. Entsprechendes gilt für vom Beifahrer 3 gesprochene Befehle.

Weitere Ausführungsformen der Zugriffserkennungsmittel 11 richten sich insbesondere auf eine alternative Sensorik.

So können die Zugriffserkennungsmittel anstelle der vorgenannten Sensorik auch eine Radarsensorik umfassen

Ebenso können die Zugriffserkennungsmittel 11 eine Sensorik umfassen, die und deren Signalauswertung auf Basis eines Tiefensensors nach dem Laufzeit- oder alternativ dem Laserscanner-Prinzip arbeitet.

Auch diese alternativen Mess- und Auswertemethoden sind aus dem Stand der Technik hinlänglich bekannt, beispielsweise aus
R. Schwarte et al. "New Powerful Sensory Tool in Automotive Safety Systems Based on PMD-Technology", Advanced Microsystems for Automotive Applications 2000, Springer-Verlag, Berlin Heidelberg, 2000,
auf welche Veröffentlichung hiermit ausdrücklich Bezug genommen wird, so dass sich eine ausführliche Erläuterung dieser Prinzipien an dieser Stelle erübrigt.

Gemäß einer ersten einfachen Ausführungsform der Bedienungssteuerung kann es vorgesehen sein, dass die Bedienung bzw. Bedienbarkeit des Fahrzeugsystems 1 allein aufgrund des erkannten Bedieners, insbesondere Fahrzeugführer 2 oder sonstiger Fahrzeuginsasse 3, gesteuert wird. Dazu umfasst die Steuerung 12 eine zweite Softwarekomponente, die das Signal der Bedienererkennung 11 weiterverarbeitet und in dessen Abhängigkeit die Bedieneinrichtung 15, insbesondere deren Funktionsumfang steuert. Die Steuerung der Bedienung des Fahrzeugsystems 1 beinhaltet dabei insbesondere eine Einschränkung bzw. Freischaltung von Bedienfunktionen in Abhängigkeit des bedienenden Fahrzeuginsassen. So kann es vorgesehen sein, dass dem Fahrzeugführer nur eine beschränkte Bedienoberfläche, also ein beschränkter Funktionsumfang 13 und eine beschränkte Funktionsauswahl bzw. Bedienerführung 14 zur Verfügung steht, während der Beifahrer 3 auf den vollen Bedienumfang des Fahrzeugsystems 1 zugreifen kann.

Gemäß einer bevorzugten Ausführungsform der Erfindung sind an die Steuerung 12 des erfindungsgemäßen Fahrzeugsystems 1 ferner Mittel 16 zur Erzeugung mindestens eines den Bewegungszustand, insbesondere die Fahrt im Gegensatz zum Stillstand des Kraftfahrzeugs anzeigenden Signals angeschlossen. Dabei handelt es sich beispielsweise um einen Tachosignalgenerator 162, der ein die aktuelle Fahrzeuggeschwindigkeit anzeigendes Signal erzeugt. Im Falle eines Fahrzeugnavigationssystems 1 können die Mittel 16 auch einen GPS-Empfänger umfassen, der Positionsdaten über die aktuelle Fahrzeugposition auswertet und daraus ein den aktuellen Bewegungszustand des Fahrzeugs anzeigendes Signal ableitet.

Die den Bewegungszustand des Fahrzeugs anzeigenden Signale beispielsweise des Tachosignalgenerators 162 sind einer Auswertung 163 zugeführt, die vorzugsweise als Bestandteil der Steuerung in Form einer dritten Soflwareroutine ausgeführt ist. Die Auswertung 162 ist dazu ausgebildet, anhand der den Bewegungszustand des Fahrzeugs anzeigenden Signale eine Entscheidung darüber zu treffen, ob das Fahrzeug steht oder fährt oder mit einer bestimmten Mindestgeschwindigkeit fährt.

Signalgenerator 162 und Auswertung 161 bilden zusammen eine Einrichtung 16 zur Erkennung einer Fahrt des Kraftfahrzeugs.

Gemäß der bevorzugten zweiten Ausführungsform der Bedienungssteuerung, die auf der bevorzugten Ausführungsform des Fahrzeugsystems mit Bewegungserkennung 16 fußt, ist vorgesehen, dass die Steuerung der Bedienung des Fahrzeugsystems 1 in Abhängigkeit sowohl des Bewegungszustandes des Fahrzeugs als auch des erkannten Bedieners 2 oder 3 des Fahrzeugsystems 1 erfolgt.

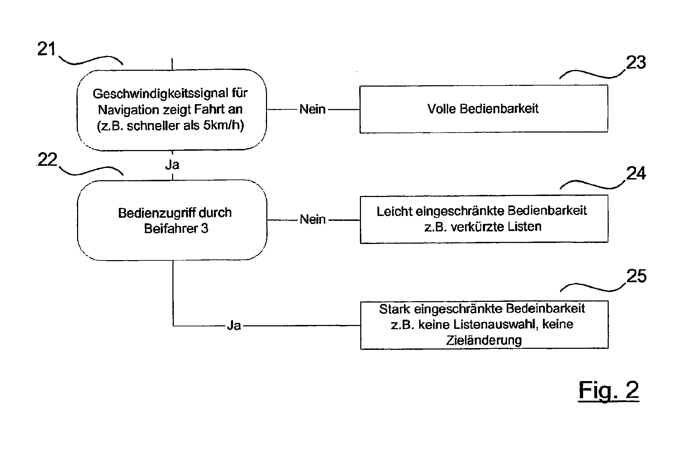

Dies wird nachfolgend am Beispiel eines Fahrzeugnavigationssystems in einem Kraftfahrzeug unter Bezugnahme auf den Ablaufplan der Figur 2 verdeutlicht.

Zu unterscheiden sind dabei im wesentlichen drei Zustände.

### 1. Fahrzeugstillstand

Die Bewegungserkennung 16 detektiert aufgrund der mittels der Sensorik 162 erfassten Bewegungsdaten einen Stillstand des Fahrzeugs (Schritt 21 - Alternative "Nein"). Für diesen Fall ermöglicht die Steuerung 12 eine Bedienung des Fahrzeugnavigationssystems 1 im vollen Umfang (Schritt 23). Dies bedeutet, dass beispielsweise ein Fahrtziel, also insbesondere der Name des Zielorts und ein zugehöriger Straßenname über Bedienelemente der Eingabeeinrichtung 13 des Navigationssystems eingegeben werden können, wobei die Eingabe durch entsprechende Anzeigen beispielsweise von Namensvorschlägen aufgrund eingegebener Buchstaben auf der Anzeigevorrichtung 14 durch das Navigationssystem 1 unterstützt wird.

### 2. Bewegung des Fahrzeugs, Bedienzugriff des Fahrzeugführers 2

Die Bewegungserkennung 16 erkennt aufgrund der mittels der Sensorik 162 erfassten Bewegungsdaten auf eine Bewegung, also Fahrt des Fahrzeugs (Schritt 21, Alternative "Ja"). Ferner erkennt die Zugriffserkennung, dass der Fahrzeugführer auf die Bedieneinrichtung 15 zugreift (Schritt 22, Alternative "Ja"), also die Hand des Fahrzeugführers 2 sich im Bereich der Eingabeeinrichtung 2 des Fahrzeugnavigationssystems 1 befindet und eine Bedienelement des Fahrzeugnavigationssystems 1 betätigt wird. Alternativ kann dieser Zugriffszustand auch dadurch erkannt werden, dass ein Bedienelement der Eingabeeinrichtung 13 betätigt wird und sich die Hand 31 des Beifahrers nicht im Bereich der Eingabeeinrichtung 13 des Fahrzeugnavigationssystems befindet.

In diesem Fall steuert die Steuerung 12 die Funktionen des Navigationssystems 1 derart, dass sie an den Fahrzeugführer gerichtete Ausgaben mittels der Ausgabeeinrichtung 14 einschränkt bzw. vereinfacht, um eine Ablenkung des Fahrzeugführers 2 vom Verkehrsgeschehen möglichst gering zu halten. Im vorliegenden Beispiel des Fahrzeugnavigationssystems wird beispielsweise im Rahmen der Zielführung während der Fahrt des Fahrzeugs eine Kartendarstellung mit eingezeichneter Route durch die Anzeige einfacher und schnell zu erfassender Abbiegepfeile und durch eine einfache akustische Ansage der Abbiegehinweise ersetzt. So werden insbesondere komplexe Ansagen, wie etwa "Bitte biegen sie in 500 m nach links in die Hildesheimer Strasse. Bitte reduzieren sie die Geschwindigkeit, die Kurve ist eng." durch kürzere und einfacher zu erfassende Handlungsanweisungen wie etwa "gleich links" oder "nächste Straße links" ersetzt.

Ferner sperrt die Steuerung 12 die Eingabeeinrichtung 13 der Bedieneinrichtung 15 für Eingaben des Fahrzeugführers 2 vollständig, realisiert also die an sich bekannte Speed-Lock-Funktion im vorgenannten Sinne (Schritt 25).

### 3. Bewegung des Fahrzeugs, Bedienzugriff des Beifahrers 3

Die Bewegungserkennung 16 erkennt aufgrund der mittels der Sensorik 162 erfassten Bewegungsdaten auf eine Bewegung, also Fahrt des Fahrzeugs (schritt 21, Alternative "Ja"). Ferner erkennt die Zugriffserkennung 11, dass der Beifahrer 3 auf die Bedieneinrichtung 15 zugreift (Schritt 22, Alternative "Nein''), also die Hand 31 des Beifahrers 3 sich im Bereich der Eingabeeinrichtung 13 des Fahrzeugnavigationssystems 1 befindet und eine Bedienelement des Fahrzeugnavigationssystems 1 betätigt wird. Alternativ kann dieser Zugriffszustand auch dadurch erkannt werden, dass ein Bedienelement der Eingabeeinrichtung 13 betätigt wird und sich die Hand des Fahrzeugführers 2 nicht im Bereich der Eingabeeinrichtung 13 des Fahrzeugnavigationssystems 1 befindet.

Für diesen Fall ermöglicht die Steuerung 12 zumindest eine eingeschränkte, je nach Ausführungsform der Erfindung auch eine vollständige Bedienbarkeit des Fahrzeugsystems 1 (Schritt 24). Vorzugsweise ermöglicht die Steuerung 12 in diesem Falle, also bei Bewegung des Fahrzeugs und Bedienzugriff durch den Beifahrer 3 alle Anzeigemöglichkeiten und Eingabevorgänge, die auch bei Stillstand des Fahrzeugs möglich sind, da diese durch den Beifahrer 3 vorgenommen werden können, der sich nicht auf das Führen des Fahrzeugs konzentrieren muss. Vorzugsweise werden aber die Ausgaben, die sich überwiegend direkt an den mit der Fahraufgabe beschäftigten Fahrzeugführer richten, wie vorstehend beschrieben in vereinfachter und damit leicht zu erfassender Form ausgegeben.

Alternativ kann es hier (Schritt 24) auch vorgesehen sein, dass beispielsweise die akustischen Fahrtrichtungshinweise des Navigationssystems 1 in einfach zu erfassender verkürzter Form ausgegeben werden, wohingegen auf dem Display des Fahrzeugnavigationssystems eine detaillierte Kartendarstellung mit eingezeichneter Fahrtroute angezeigt wird, so dass diese durch den Beifahrer nachvollzogen werden kann, der dann dem Fahrzeugführer erforderlichenfalls erläuternde oder ergänzende Hinweise geben kann. Ferner ermöglicht diese Alternative dem Beifahrer auch verbesserte Möglichkeiten zum Nachvollziehen und gegebenenfalls Korrigieren der Route.

Weiter kann es auch vorgesehen sein, dass der Umfang der Bedienbarkeit im Falle der Fahrt des Fahrzeugs für Bedienzugriffe des Beifahrers 3 individuell einstellbar ist.

Für den Fall, dass Fahrzeugführer und Beifahrer jeweils eigene Bedieneinrichtungen, also eigene Ausgabe- und /oder Eingabeeinrichtungen zur Verfügung stehen, wie dies etwa im Falle eigener Unterhaltungssysteme für die Fonds-Passagiere der Fall ist, oder, dass etwa im Kombiinstrument eine weitere Anzeigevorrichtung zusätzlich zu der in der Mittelkonsole angeordneten Anzeige des Fahrzeugsystems vorhanden ist, können vorteilhaft weitere Bedienstrategien vorgesehen sein. So können hier im Falle eines fahrenden Fahrzeugs und Bedienzugriff durch den Beifahrer 3 etwa dem Fahrzeugführer 2 über das zusätzliche Display im Kombiinstrument einfache Richtungspfeile zur Zielführung angezeigt werden, während dem Beifahrer auf dem Display in der Mittelkonsole oder der Kopfstütze des Vordersitzes eine detaillierte Kartendarstellung mit eingezeichneter Route zur Verfügung gestellt wird. Ferner kann dem Beifahrer 3 eine Bedienung dahingehend ermöglicht werden, dass er beispielsweise einen beliebigen Kartenausschnitt oder Zoom-Faktor über die Eingabeeinrichtung einstellen kann, während dem Fahrer 2 weiterhin lediglich die Richtungspfeile angezeigt werden.

Somit realisiert die Steuerung 12 eine bewegungs- und bedienerabhängige Steuerung der Bedienung des Fahrzeugsystems 1 durch die Bedieneinrichtung 15.

## Patentansprüche

1. Fahrzeugsystem (1) zum Betrieb in einem Kraftfahrzeug mit
- einer Bedieneinrichtung (15) zur Bedienung des Fahrzeugsystems (1) und einer Steuerung (12) zur Beeinflussung einer Bedienung des Fahrzeugsystems über die Bedieneinrichtung (15),
- einer Einrichtung (11), die dazu ausgebildet ist, zu erkennen, ob ein Bedienzugriff auf die Bedieneinrichtung durch den Fahrzeugführer (2) oder einen sonstigen Insassen (3) des Fahrzeugs erfolgt,
wobei die Steuerung (12) dazu ausgebildet ist, die Bedienung des Fahrzeugsystems (1) über die Bedieneinrichtung (15) zumindest in Abhängigkeit davon zu beeinflussen, ob ein Bedienzugriff auf die Bedieneinrichtung (15) durch den Fahrzeugführer (2) oder einen anderen Fahrzeuginsassen (3) erfolgt,
**dadurch gekennzeichnet,**
**dass** die Zugriffserkennungsmittel (11)
- eine Videosensorik, insbesondere eine Kamera (115), deren Bilderfassungsbereich zumindest den Fahrer-(2) oder den Beifahrersitzplatz (3), vorzugsweise sowohl Fahrer- als auch Beifahrersitzplatz erfasst, oder
- eine Radarsensorik oder
- einen Tiefensensor, welcher nach
- dem Laufzeitprinzip,
- dem Laserscannerprinzip oder
- dem Prinzip der strukturierten Beleuchtung
arbeitet,
umfassen.

2. Fahrzeugsystem nach Anspruch 1, **dadurch gekennzeichnet, dass** im Falle der Ausbildung der Zugriffserkennungsmittel (11) als Videosensorik diese einen Stereo- oder Mehrkamera-Videosensor umfassen.

3. Fahrzeugsystem nach Anspruch 1 oder 2, **dadurch gekennzeichnet, dass** im Falle der Ausbildung der Zugriffserkennungsmittel (11) als Videosensorik die Zugriffserkennungsmittel (11) dazu ausgebildet sind, in die Auswertung der Videosensorsignale darin enthaltene Grauwertinformationen einzubeziehen.

## Claims

1. Vehicle system (1) for operation in a motor vehicle having
- an operator control device (15) for operator control of the vehicle system (1) and a controller (12) for influencing operator control of the vehicle system using the operator control device (15),
- a device (11) which is designed to recognize whether operator control access to the operator control device is effected by the vehicle driver (2) or by another occupant (3) of the vehicle,
the controller (12) being designed to influence operator control of the vehicle system (1) using the operator control device (15) at least on the basis of whether operator control access to the operator control device (15) is effected by the vehicle driver (2) or by another vehicle occupant (3),
**characterized**
**in that** the access recognition means (11) comprise
- a video sensor system, particularly a camera (115), whose image capture range captures at least the driver's seat (2) or the front passenger's seat (3), preferably both the driver's seat and the front passenger's seat, or
- a radar sensor system or
- a depth sensor operating according to
- the delay-time principle,
- the laser-scanner principle or
- the principle of structured illumination.

2. Vehicle system according to Claim 1, **characterized in that** when the access recognition means (11) are in the form of a video sensor system they comprise a stereo-camera or multiple-camera video sensor.

3. Vehicle system according to Claim 1 or 2, **characterized in that** when the access recognition means (11) are in the form of a video sensor system the access recognition means (11) are designed to incorporate greyscale information contained in the video sensor signals into the evaluation of said signals.

## Revendications

1. Système de véhicule (1) pour fonctionner dans un véhicule automobile, comprenant :
- une installation de manoeuvre (15) pour manoeuvrer le système de véhicule et une commande (12) pour influencer une manoeuvre du système de véhicule par l'intermédiaire de l'installation de manoeuvre (15),
- un dispositif de détection (11) pour détecter si une intervention sur l'installation de manoeuvre est effectuée par le conducteur (2) ou par un passager (3) du véhicule,
la commande (12) étant prévue pour influencer la manoeuvre du système de véhicule (1) au moyen de l'installation de manoeuvre (15) au moins en fonction de ce que l'intervention sur l'installation de manoeuvre (15) est faite par le conducteur (2) ou par un autre passager (3),
**caractérisé en ce que**
les moyens de détection (11) d'intervention comprennent
un capteur vidéo, en particulier une caméra (115) dont la zone de prise d'image détecte au moins le siège du conducteur (2) ou du passager (3), de préférence aussi bien la place du conducteur que du passager, ou
un capteur radar, ou
un indicateur de profondeur fonctionnant selon le principe
- du temps de fonctionnement,
- du scannage laser, ou
- de l'éclairage structuré.

2. Système de véhicule selon la revendication 1,
**caractérisé en ce qu'**
dans le cas où les moyens de détection d'intervention (11) sont sous forme d'un capteur vidéo ceux-ci comprennent un capteur vidéo stéréo ou à multicaméras.

3. Système de véhicule selon la revendication 1 ou 2,
**caractérisé en ce qu'**
dans le cas où les moyens de détection d'intervention (11) sont sous forme d'un capteur vidéo, ils intègrent dans l'exploitation des signaux de capteurs vidéo, des informations de valeur de gris contenues dans ceux-ci.
